# EUROPEAN PATENT SPECIFICATION

(11) **EP 4 411 629 B1**
(45) Date of publication and mention of the grant of the patent: **04.11.2026**
(21) Application number: 22874763.0
(22) Date of filing: 22.09.2022
(51) Int. Cl.: G06V 20/52, G06V 10/25, G06V 10/56, G06F 21/62, G06N 3/04, G06N 3/084, G06T 5/70

(54) **METHOD AND APPARATUS FOR IMAGE DATA DESENSITIZATION**
VERFAHREN UND VORRICHTUNG ZUR DESENSIBILISIERUNG VON BILDDATEN
PROCÉDÉ ET APPAREIL DE DÉSENSIBILISATION POUR DES DONNÉES D'IMAGE

(30) Priority: 30.09.2021 CN 202111161187
(43) Date of publication of application: 07.08.2024
(73) Proprietor: Beijing Horizon Information Technology Co., Ltd., Beijing 100094 (CN)
(72) Inventor: ZUO, Cuilian, Beijing 100094 (CN); WANG, Guoli, Beijing 100094 (CN); ZHANG, Qian, Beijing 100094 (CN); HUANG, Chang, Beijing 100094 (CN)
(74) Representative: Dehns Germany Partnerschaft mbB
(86) International application number: PCT/CN2022/120560
(87) International publication number: WO 2023/051377

(56) References cited:
- CN-A- 111 310 734
- CN-A- 111 402 146
- CN-A- 111 652 352
- CN-A- 112 115 811
- CN-A- 112 633 230
- CN-A- 113 837 970
- CN-A- 113 838 070
- CN-A- 113 838 070

## Description

### FIELD OF THE INVENTION

This disclosure relates to the field of computer vision technologies, and in particular, to a method and an apparatus for image data desensitization.

### BACKGROUND OF THE INVENTION

With development of intelligent recognition technologies, issues about data privacy have gradually attracted widespread attention. How to ensure security of private data in image collection is a problem that needs to be urgently resolved. Document CN 113 838 070 A, which was published after the priority date of the present application, discloses a data desensitization method including: determining target sensitive information in an native image collected by an image sensor and the position area of the target sensitive information in the native image; performing image restoration on the native image to obtain a three-channel image; and desensitizing the image data of the three-channel image based on the position area of the target sensitive information in the native image. Therefore, the three-channel image data stored is subjected to data desensitization so that the data safety is ensured.

The document CN112115811A, discloses an image processing method based on privacy protection, which comprises: enabling a terminal equipment to carry out convolution processing on a biological characteristic image by using a convolution kernel to obtain a desensitized image; enabling a server to construct a recovery matrix according to the convolution kernel; and enabling the server to carry out recovery processing on the desensitized image by using a recovery matrix to obtain the biological characteristic image.

### SUMMARY OF THE INVENTION

To resolve the foregoing technical problem, this invention is proposed. Embodiments of this invention provide a method and an apparatus for image data desensitization.

According to a first aspect of this invention, a method for image data desensitization according to claim 1 is provided.

According to a second aspect of this invention, an apparatus for image data desensitization according to claim 5 is provided.

According to a third aspect of this invention, a computer readable storage medium is provided. The storage medium stores a computer program, and the computer program is used for implementing the method for image data desensitization according to the first aspect.

According to a fourth aspect of this invention, an electronic device is provided, where the electronic device includes:
a processor; and
a memory, configured to store processor-executable instructions, where
the processor is configured to read the executable instructions from the memory, and execute the instructions to implement the method for image data desensitization according to the first aspect.

Based on the method and the apparatus for image data desensitization provided by this invention, the target image channel, in the native image, on which target recognition needs to be performed is first determined. Subsequently, the single-channel image is generated for the native data of the target image channel. Subsequently, the target object is recognized from the single-channel image, so that the sensitive area in the native image is determined based on the recognized target object. Finally, data desensitization processing is performed on the native data in the sensitive area. In this way, it is ensured that private image data cannot be stored and leaked in a subsequent digital image signal processing process, so that private data is protected at a source of generating the image data, thereby improving data security.

The technical solutions of this invention are further described below in detail with reference to the accompanying drawings and the embodiments.

### BRIEF DESCRIPTION OF THE DRAWINGS

By describing the embodiments of this disclosure more detailed with reference to the accompanying drawings, the foregoing and other objectives, features, and advantages of this disclosure will become more apparent. The accompanying drawings are used to provide further understanding of the embodiments of this disclosure, constitute a part of the specification, are used to explain this disclosure together with the embodiments of this disclosure, and do not constitute limitation to this disclosure. In the accompanying drawings, same reference numerals generally represent same components or steps.
FIG. 1 is a schematic flowchart of a method for image data desensitization according to an embodiment of this disclosure;
FIG. 2 is a schematic diagram of determining a sensitive area in a native image according to an example of this disclosure;
FIG. 3 is a schematic flowchart of step S1 according to an embodiment of this disclosure;
FIG. 4 is a schematic flowchart of step S1 according to another embodiment of this disclosure;
FIG. 5 is a schematic diagram of performing image interpolation processing on a native image to obtain a single-channel image according to another example of this disclosure;
FIG. 6 is a schematic diagram of determining a sensitive area in a native image based on a single-channel image according to an example corresponding to FIG. 5;
FIG. 7 is a block diagram of a structure of an apparatus for image data desensitization according to an embodiment of this disclosure;
FIG. 8 is a block diagram of a structure of an image channel determining module 100 according to an embodiment of this disclosure;
FIG. 9 is a block diagram of a structure of an image channel determining module 100 according to another embodiment of this disclosure; and
FIG. 10 is a diagram of a structure of an electronic device according to an exemplary embodiment of this disclosure.

### DETAILED DESCRIPTION OF THE EMBODIMENTS

Exemplary embodiments of this disclosure are described below in detail with reference to the accompanying drawings. Obviously, the described embodiments are merely a part, rather than all of embodiments of this disclosure. It should be understood that this disclosure is not limited by the exemplary embodiments described herein.

It should be noted that unless otherwise specified, the scope of this disclosure is not limited by relative arrangement, numeric expressions, and numerical values of components and steps described in these embodiments.

A person skilled in the art may understand that terms such as "first" and "second" in the embodiments of this disclosure are merely configured to distinguish between different steps, devices, or modules, and indicate neither any particular technical meaning, nor necessarily logical ordering among them.

It should be further understood that, in the embodiments of this disclosure, the term "multiple"/" a plurality of" may refer to two or more; and the term "at least one" may refer to one, two, or more.

The embodiments of this disclosure may be applicable to a terminal device, a computer system, a server, and other electronic devices, which may be operated together with numerous other general-purpose or special-purpose computing system environments or configurations. Well-known examples of a terminal device, a computing system, and environment and/or configuration applicable to be used with the terminal device, the computer system, the server, and other electronic devices include but are not limited to: a personal computer system, a server computer system, a thin client, a thick client, a handheld or laptop device, a microprocessor-based system, a set-top box, programmable consumer electronics, a network personal computer, a small computer system, a mainframe computer system, and a distributed cloud computing technology environment including any of the foregoing systems.

### Exemplary method

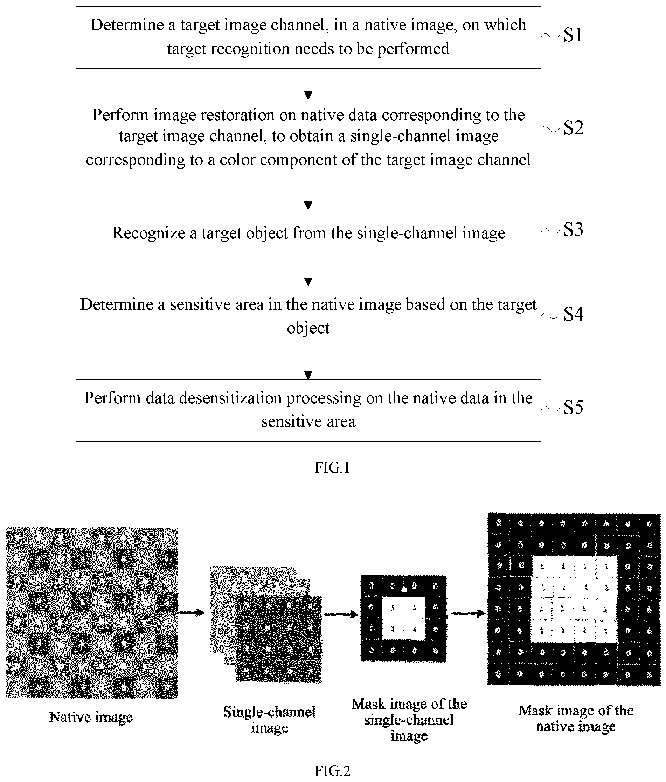

FIG. 1 is a schematic flowchart of a method for image data desensitization according to an embodiment of this disclosure. This embodiment is applied to an electronic device. As shown in FIG. 1, the following steps are included.

S1. Determine a target image channel, in a native image, on which target recognition needs to be performed.

In this embodiment of this disclosure, the native image is collected by an image sensor. For example, the native image may be a raw image of a driver, on which no image restoration is performed, that is collected by an image sensor inside a vehicle during assisted driving or autonomous driving of the vehicle; or may be a raw image of a passenger, on which no image restoration is performed, that is collected by the image sensor inside the vehicle.

After the native image is obtained, the target image channel, in the native image, on which target recognition needs to be performed may be determined by a control system of the vehicle or a terminal that may be connected to control the vehicle (such as a mobile phone or a server).

FIG. 2 is a schematic diagram of determining a sensitive area in a native image according to an example of this disclosure. As shown in FIG. 2, in this example, resolution of the native image is 8×8, and resolution of a single-channel image obtained through channel separation may be 4×4 (for example, resolution of a R-channel image is 4×4). Actually, the resolution of the native image is determined by resolution of the image sensor. The resolution of 8×8 and the resolution of 4×4 shown in FIG. 2 are only for exemplary descriptions, and cannot constitute a limitation to this disclosure. This embodiment of this disclosure does not limit specific sizes of the native image and a mask image. For example, the native image may be an image with resolution of 1920× 1280, an image with resolution of 1024×768, or an image with another size.

The target image channel is one of a R channel, a G channel, and a B channel, which is specifically determined according to user settings. Alternatively, the target image channel is determined based on image quality of a R-channel image, a G-channel image, and a B-channel image.

It should be noted that in the following embodiments, image data is desensitized by means of the control system of the vehicle as an example. However, a person skilled in the art may be learned that the terminal that may be connected to control the vehicle may also be used to desensitize the image data.

S2: Perform image restoration on native data corresponding to the target image channel, to obtain a single-channel image corresponding to a color component of the target image channel. For example, if the target image channel is a R channel, image restoration is performed on native data corresponding to the R channel to obtain a single-channel image with a color component of R, that is, a R-channel image.

S3: Recognize a target object from the single-channel image.

Specifically, the target object in the single-channel image is determined by means of an image recognition technology. The target object is determined based on a behavior recognition task. For example, when the native image is a raw image of the driver in the vehicle and the behavior recognition task is to recognize incoming and outgoing calls of the driver, a side-face area and a hand area of the driver in the R-channel image may be used as target objects.

S4: Determine a sensitive area in the native image based on the target object.

Specifically, a position of the target object in the single-channel image is determined first. For example, in the example shown in FIG. 2, the position of the target object in the single-channel image includes an area of 4 middle grids of images of the single-channel image. Subsequently, the sensitive area in the native image may be determined based on a corresponding relationship between the single-channel image and the native image. For example, in the example shown in FIG. 2, the sensitive area in the native image is an area of 16 middle grids of images of the native image.

S5: Perform data desensitization processing on the native data in the sensitive area. Manners for the data desensitization processing may include adjusting a pixel value of a pixel within the sensitive area. According to the claimed embodiment, the data desensitization processing includes performing image blurring processing on the sensitive area.

In this embodiment, the target image channel, in the native image, on which target recognition needs to be performed is first determined. Subsequently, the single-channel image is generated for the native data of the target image channel. Subsequently, the target object is recognized from the single-channel image, so that the sensitive area in the native image is determined based on the recognized target object. Finally, data desensitization processing is performed on the native data in the sensitive area. In this way, it may be ensured that private image data cannot be stored and leaked in a subsequent digital image signal processing process, so that private data is protected at a source of generating the image data, thereby improving data security.

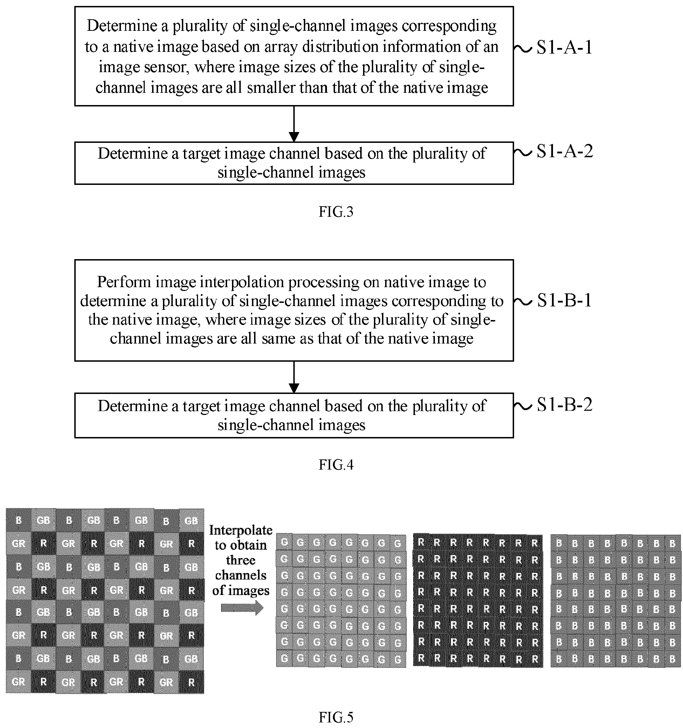

FIG. 3 is a schematic flowchart of step S1 according to an embodiment of this disclosure. As shown in FIG. 3, step S1 includes the following steps.

S1-A-1: Determine a plurality of single-channel images corresponding to the native image based on array distribution information of an image sensor. The array distribution information includes positions for disposing various channels, that is, includes positions for disposing the R channel, the G channel, and the B channel. The R-channel image, the G-channel image, and the B-channel image corresponding to the native image may be obtained based on the array distribution information of the image sensor.

Referring to the native image in FIG. 2 again, the array distribution information of the image sensor is reflected in the native image. The R-channel image, the G-channel image, and the B-channel image corresponding to the native image may be obtained based on the array distribution information. For example, the resolution of the R-channel image is 4×4, and the resolution of the native image is 8×8. In this example, an image size of the R-channel image is smaller than that of the native image.

S1-A-2: Determine the target image channel based on the plurality of single-channel images.

Specifically, an image channel is selected as the target image channel based on system settings or based on the image quality of the R-channel image, the G-channel image, and the B-channel image. For example, the R channel is selected as the target image channel.

In this embodiment, an advantage of performing target recognition directly based on single-channel image data of the native images is that a full-resolution image is interpolated without requiring an interpolation step, which greatly reduces complexity of algorithm implementation.

FIG. 4 is a schematic flowchart of step S1 according to another embodiment of this disclosure. As shown in FIG. 4, step S1 includes the following steps.

S1-B-1: Perform image interpolation processing on the native image to determine a plurality of single-channel images corresponding to the native image. Image sizes of the plurality of single-channel images are all same as that of the native image.

FIG. 5 is a schematic diagram of performing image interpolation processing on a native image to obtain a single-channel image according to another example of this disclosure. As shown in FIG. 5, in this example, the resolution of the native image is 8×8, and resolution of the plurality of single-channel images after the image interpolation processing is also 8×8. For example, in this example, the resolution of the R-channel image is 8×8, resolution of the G-channel image is 8×8, resolution of the B-channel image is 8×8, and the resolution of the native image is also 8×8. In this example, image sizes of the R-channel image, the G-channel image, and the B-channel image are all same as that of the native image.

It should be noted that the resolution of 8×8 shown in FIG. 5 is only for exemplary descriptions. Actually, the native image and the single-channel image after the image interpolation processing may be images with resolution of 1920×1280, images with resolution of 1024×768, or images with other sizes.

In this embodiment of this disclosure, manners for the image interpolation processing include nearest neighbor interpolation processing, bilinear interpolation processing, bicubic interpolation processing, adaptive image interpolation processing based on edge gradient information about an image, and the like. The nearest neighbor interpolation, which is also referred to as zero-order interpolation, makes a grayscale value of a transformed pixel equal to that of an input pixel closest to the transformed pixel. Bilinear interpolation processing is to perform linear interpolations in two directions respectively. For example, a linear interpolation is performed in a horizontal direction first, and then a linear interpolation is performed in a vertical direction. A pixel value at a certain position may be obtained through two linear interpolations. Bicubic interpolation processing may be implemented by performing weighted averaging on sixteen sampling points within a 4×4 neighborhood of a pixel to be interpolated. Two polynomials need to be used to interpolate a cubic function, and one polynomial is used one direction. The adaptive image interpolation manner based on the edge gradient information about the image considers, during upsampling interpolation, not only distance-related weight information but also edge gradient-related weight information according to a gradient of the image. A gradient value of the image is relatively small along an edge direction of the image. A gradient value of the image is relatively large along a direction perpendicular to the edge direction of the image. In other words, an interpolation weight value of a pixel along the edge direction is greater, while an interpolation weight value of a pixel along a direction perpendicular to the edge direction is smaller, which may ensure better interpolation performance at an edge position of the image.

S1-B-2: Determine the target image channel based on the plurality of single-channel images.

Specifically, the target image channel is one of a R channel, a G channel, and a B channel. This is specifically determined according to user settings, or is determined based on image quality of a R-channel image, a G-channel image, and a B-channel image.

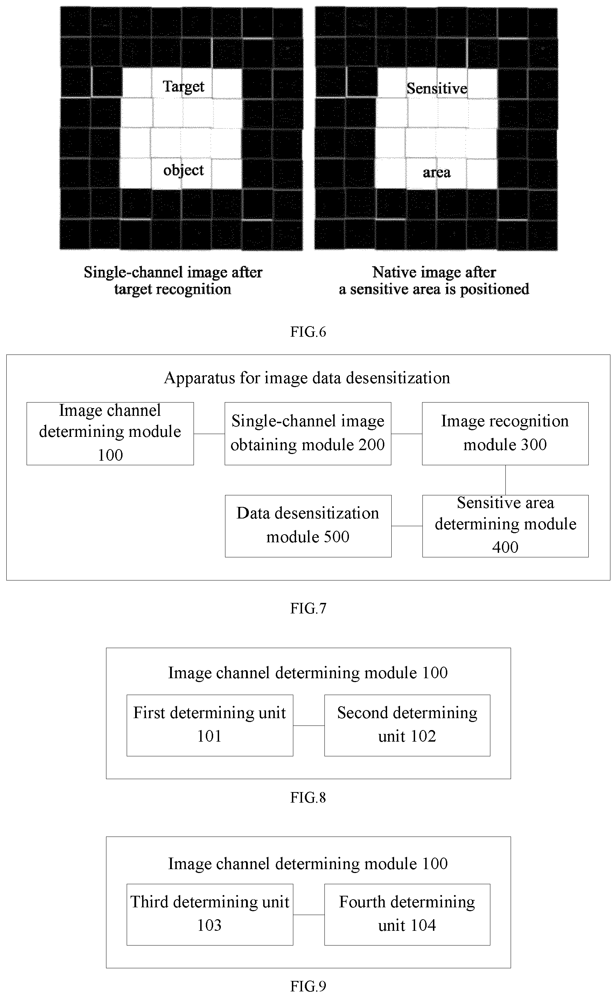

FIG. 6 is a schematic diagram of determining a sensitive area in a local native image based on a single-channel image according to an example corresponding to FIG. 5. As shown in FIG. 6, when the image size of the single-channel image is same as that of the native image, the position of the target object in the single-channel image includes an area of 16 middle grids of images of the single-channel image, and the sensitive area in the native image is also an area of 16 middle grids of images of the native image. Positions of the image areas of the single-channel image and the native image correspond to each other.

In this embodiment, three channels, that is, R, G, and B, of images with complete resolution are obtained through interpolation of the native image. For example, for the native image with the resolution of 8×8, a single-channel image with resolution of 8×8 is obtained through image interpolation as shown in FIG. 5, and a single-channel image with resolution of 4×4 is obtained through channel separation as shown in FIG. 2. Therefore, the single-channel image obtained through image interpolation has higher resolution and contains more comprehensive information as compared to the single-channel image obtained by performing channel separation on the native image, thereby more facilitating recognition of sensitive information in subsequent steps.

In an embodiment of this disclosure, step S3 specifically includes: recognizing the target object from the single-channel image by means of a pre-trained recognition model.

In this embodiment, the recognition model is trained according to the following manners.

Based on an initial model, downsampling is performed on a sample single-channel image by means of a fully convolutional network.

Subsequently, based on the initial model, upsampling is performed after the downsampling, to restore the image to an image size that is same as that of the sample single-channel image.

Subsequently, the sample single-channel image is predicted based on the initial model pixel by pixel. Backpropagation is performed based on a difference between a prediction result and a classification label of the sample single-channel image to update a parameter of the initial model, until a iteration stop condition is met, so as to obtain a final recognition model.

The single-channel image that requires target recognition is used as input to the recognition model, and the target object in the single-channel image may be recognized by means of the recognition model.

In this embodiment, the target object in the single-channel image may be recognized quickly and accurately by means of the pre-trained recognition model, thereby facilitating subsequent steps of determining the sensitive area in the native image and performing data desensitization processing on the native data in the sensitive area.

In a non-claimed example of this disclosure, step S5 includes: setting a pixel within the sensitive area to a target pixel value. A difference value between the target pixel value and a pixel boundary value is within a preset difference range. For example, the preset difference range may be set to [0, 5].

In an example of this disclosure, when a range value of the pixel in the native image is from 0 to 255, and the preset difference range is set to [0, 5], the target pixel value may be 0, 1, 2, 3, 4, 251, 252, 253, 254, or 255.

In this example, by setting a pixel within a target sensitive image area in the native image to the target pixel value, reverse recovery of real user privacy data may be avoided, so as to prevent privacy data of a user from being restored after a RGB true color image is formed by performing image restoration on the native image. In this way, user privacy is effectively protected.

In this invention, step S5 includes: performing image blurring processing on the sensitive area. For example, Gaussian blurring processing is performed.

In this embodiment, user privacy may be effectively protected by performing image blurring processing on the sensitive area in the native image.

Further, blurring processing is performed on the sensitive area in the native image by means of a preset convolution kernel. A size and weight distribution of the preset convolution kernel are determined based on a security level type of a target object corresponding to the sensitive area. If a security level type identifier of the target object indicates that the target object (such as an eye area of the driver in the native image) needs to be kept highly confidential, resolution of the convolution kernel is set to be relatively large, and weight of the convolution kernel needs to be set to have higher blurring intensity. For example, the size of the preset convolution kernel may be 21×21, so as to ensure that the target object in the sensitive area is not restored in the future. If the security level type identifier of the target object indicates that the security level of the target object (such as a forehead area of the driver in the native image) is relatively low, the resolution of the convolution kernel is set to be relatively small, and the weight of the convolution kernel needs to be set to have relatively weak blurring intensity. For example, the size of the preset convolution kernel may be 5×5. Performing image blurring by means of a relatively small convolution kernel may reduce complexity of the image blurring processing, and greatly improve efficiency of the image blurring processing.

In this embodiment, the user privacy may be effectively protected by performing image blurring processing on the sensitive area in the native image by means of the preset convolution kernel.

Any method for image data desensitization provided in the embodiments of this disclosure may be implemented by any suitable device with a data processing capability, including but not limited to a terminal device and a server. Alternatively, any method for image data desensitization provided in the embodiments of this disclosure is implemented by a processor. For example, the processor implements any method for image data desensitization described in the embodiments of this disclosure by invoking corresponding instructions stored in a memory. Details are not described below again.

### Exemplary apparatus

FIG. 7 is a block diagram of a structure of an apparatus for image data desensitization according to an embodiment of this disclosure. As shown in FIG. 7, the apparatus for image data desensitization in this embodiment of this disclosure includes an image channel determining module 100, a single-channel image obtaining module 200, an image recognition module 300, a sensitive area determining module 400, and a data desensitization module 500.

The image channel determining module 100 is configured to determine a target image channel, in a native image, on which target recognition needs to be performed. The single-channel image obtaining module 200 is configured to perform image restoration on native data corresponding to the target image channel, to obtain a single-channel image corresponding to a color component of the target image channel. The image recognition module 300 is configured to recognize a target object from the single-channel image. The sensitive area determining module 400 is configured to determine a sensitive area in the native image based on the target object. The data desensitization module 500 is configured to perform data desensitization processing on the native data in the sensitive area.

FIG. 8 is a block diagram of a structure of an image channel determining module 100 according to an embodiment of this disclosure. As shown in FIG. 8, the image channel determining module 100 includes:
a first determining unit 101, configured to determine a plurality of single-channel images corresponding to the native image based on array distribution information of an image sensor, where image sizes of the plurality of single-channel images are all smaller than that of the native image; and
a second determining unit 102, configured to determine the target image channel based on the plurality of single-channel images.

FIG. 9 is a block diagram of a structure of an image channel determining module 100 according to another embodiment of this disclosure. As shown in FIG. 9, the image channel determining module 100 includes:
a third determining unit 103, configured to perform image interpolation processing on the native image to determine a plurality of single-channel images corresponding to the native image, where image sizes of the plurality of single-channel images are all same as that of the native image; and
a fourth determining unit 104, configured to determine the target image channel based on the plurality of single-channel images.

In an embodiment of this disclosure, the image recognition module 300 recognizes the target object from the single-channel image by means of a pre-trained recognition model.

In a non-claimed example of this disclosure, the data desensitization module 500 is configured to set a pixel within the sensitive area to a target pixel value, where a difference value between the target pixel value and a pixel boundary value is within a preset difference range.

In an embodiment of this disclosure, the data desensitization module 500 is configured to perform image blurring processing on the sensitive area.

In an embodiment of this disclosure, the data desensitization module 500 is configured to perform image blurring processing on the sensitive area of the native image by means of a preset convolution kernel.

It should be noted that the specific implementations of the apparatus for image data desensitization in the embodiments of this disclosure are similar to the specific implementations of the method for image data desensitization in the embodiments of this disclosure. For details, reference may be made to the section of the method for image data desensitization. To reduce redundancy, details are not described again.

### Exemplary electronic device

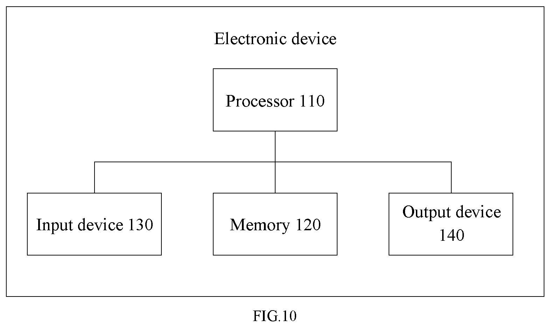

An electronic device according to an embodiment of this disclosure is described below with reference to FIG. 10. As shown in FIG. 10, the electronic device includes one or more processors 110 and a memory 120.

The processor 110 may be a central processing unit (CPU) or another form of processing unit having a data processing capability and/or instructions execution capability, and may control another component in the electronic device to perform a desired function.

The memory 120 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 110 runs the program instructions to implement the method for image data desensitization according to various embodiments of this disclosure that are described above and/or other desired functions. Various contents such as an input signal, a signal component, and a noise component may also be stored in the computer readable storage medium.

In an example, the electronic device may further include an input device 130 and an output device 140. These components are connected with each other through a bus system and/or another form of connection mechanism (not shown). The input device 130 may be a keyboard or a mouse. The output device 140 may include, for example, a display, a speaker, a printer, a communication network, and a remote output device connected by the communication network.

Certainly, for simplicity, FIG. 10 shows only some of components in the electronic device that are related to this disclosure, and components such as a bus and an input/output interface are omitted. In addition, according to specific application situations, the electronic device may further include any other appropriate components.

### Exemplary computer program product and computer readable storage medium

In addition to the foregoing method and device, the embodiments of this disclosure may also relate to a computer program product, which includes computer program instructions. When the computer program instructions are run by a processor, the processor is enabled to perform the steps, of the method for image data desensitization according to the embodiments of this disclosure, that are described in the "exemplary method" part of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure further relate to a computer readable storage medium, which stores computer program instructions. When the computer program instructions are run by the processor, the processor is enabled to perform the steps, of the method for image data desensitization according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by means of the foregoing specific details.

The block diagrams of the equipment, the apparatus, the device, and the system involved in this disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and can be used interchangeably with "including but not limited to". The terms "or" and "and" used herein refer to the term "and/or", and can be used interchangeably with "and/or", unless the context clearly indicates otherwise. The term "such as" used herein refers to the phrase "such as but not limited to", and can be used interchangeably with "such as but not limited to".

It should be further pointed out that, various components or various steps in the apparatus, the device, and the method of this disclosure may be disassembled and/or recombined. These disassembling and/or recombinations shall be regarded as equivalent solutions of this disclosure.

The foregoing description about the disclosed aspects is provided, so that this invention can be arrived at or carried out by any person skilled in the art. Various modifications to these aspects are very obvious to a person skilled in the art. Moreover, general principles defined herein can be applicable to other aspects without departing from the scope of this disclosure. Therefore, this invention is not intended to be limited to the aspects illustrated herein, but to the scope of the appended claims only.

## Claims

1. A method for image data desensitization, comprising:
determining (S1) a color channel of a native image as a target image channel, on which target recognition needs to be performed;
performing (S2) image restoration on native data corresponding to the target image channel, to obtain a single-channel image corresponding to a color component of the target image channel;
recognizing (S3) a target object from the single-channel image;
determining (S4) a sensitive area in the native image based on the target object; and
performing (S5) data desensitization processing on the native data in the sensitive area, comprising: performing image blurring processing on the sensitive area in the native image by means of a preset convolution kernel, wherein a size and weight distribution of the preset convolution kernel are determined based on a security level type of the target object such that a higher security level type corresponds to a larger size of the preset convolution kernel and higher blurring intensity and a lower security level type corresponds to a smaller size of the preset convolution kernel and lower blurring intensity, wherein the security level type is indicative of a confidentiality requirement associated with the target object.

2. The method for image data desensitization according to claim 1, wherein the determining (S1) a color channel of a native image as a target image channel, on which target recognition needs to be performed comprises:
determining (S1-A-1) a plurality of single-channel images corresponding to the native image based on array distribution information of an image sensor, wherein image sizes of the plurality of single-channel images are all smaller than that of the native image; and
determining (S1-A-2) the target image channel based on the plurality of single-channel images.

3. The method for image data desensitization according to claim 1, wherein the determining (S1) a color channel of a native image as a target image channel, on which target recognition needs to be performed comprises:
performing (S1-B-1) image interpolation processing on the native image to determine a plurality of single-channel images corresponding to the native image, wherein image sizes of the plurality of single-channel images are all same as that of the native image; and
determining (S1-B-2) the target image channel based on the plurality of single-channel images.

4. The method for image data desensitization according to claim 1, wherein the recognizing (S3) a target object from the single-channel image comprises:
recognizing the target object from the single-channel image by means of a pre-trained recognition model.

5. An apparatus for image data desensitization, comprising:
an image channel determining module (100), configured to determine a color channel of a native image as a target image channel, on which target recognition needs to be performed;
a single-channel image obtaining module (200), configured to perform image restoration on native data corresponding to the target image channel, to obtain a single-channel image corresponding to a color component of the target image channel;
an image recognition module (300), configured to recognize a target object from the single-channel image;
a sensitive area determining module (400), configured to determine a sensitive area in the native image based on the target object; and
a data desensitization module (500), configured to perform data desensitization processing on the native data in the sensitive area by performing image blurring processing on the sensitive area in the native image by means of a preset convolution kernel, wherein a size and weight distribution of the preset convolution kernel are determined based on a security level type of the target object such that a higher security level type corresponds to a larger size of the preset convolution kernel and higher blurring intensity and a lower security level type corresponds to a smaller size of the preset convolution kernel and lower blurring intensity, wherein the security level type is indicative of a confidentiality requirement associated with the target object.

6. The apparatus for image data desensitization according to claim 5, wherein the image channel determining module (100) comprises:
a first determining unit (101), configured to determine a plurality of single-channel images corresponding to the native image based on array distribution information of an image sensor, where image sizes of the plurality of single-channel images are all smaller than that of the native image; and
a second determining unit (102), configured to determine the target image channel based on the plurality of single-channel images.

7. The apparatus for image data desensitization according to claim 5, wherein the image channel determining module (100) comprises:
a third determining unit (103), configured to perform image interpolation processing on the native image to determine a plurality of single-channel images corresponding to the native image, where image sizes of the plurality of single-channel images are all same as that of the native image; and
a fourth determining unit (104), configured to determine the target image channel based on the plurality of single-channel images.

8. A computer-readable storage medium, storing a computer program, and the computer program comprising instructions which, when the program is executed by a computer, cause the computer to carry out the method for image data desensitization according to any one of claims 1 to 4.

9. An electronic device, comprising:
a processor (110); and
a memory (120), configured to store processor-executable instructions, wherein
the processor (110) is configured to read the executable instructions from the memory (120), and execute the instructions to implement the method for image data desensitization according to any one of claims 1 to 4.

10. The electronic device according to claim 9, wherein the electronic device further comprises an input device (130) and an output device (140).

11. The electronic device according to claim 10, wherein the output device (140) comprises a display, a speaker, a printer, and a remote output device connected by a communication network.

## Patentansprüche

1. Verfahren zur Entsensibilisierung von Bilddaten, umfassend:
Bestimmen (S1) eines Farbkanals eines nativen Bildes als Zielbildkanal, auf dem eine Zielerkennung durchgeführt werden muss;
Durchführen (S2) einer Bildrestauration an den nativen Daten, die dem Zielbildkanal entsprechen, um ein Ein-Kanal-Bild zu erhalten, das einer Farbkomponente des Zielbildkanals entspricht;
Erkennen (S3) eines Zielobjekts aus dem Ein-Kanal-Bild;
Bestimmen (S4) eines sensiblen Bereichs im nativen Bild basierend auf dem Zielobjekt; und
Durchführen (S5) einer Daten-Entsensibilisierungsverarbeitung an den nativen Daten im sensiblen Bereich, umfassend: Durchführen einer Bildunschärfe-Verarbeitung am sensiblen Bereich im nativen Bild mittels eines vorgegebenen Faltungskerns, wobei eine Größe und Gewichtsverteilung des vorgegebenen Faltungskerns basierend auf einem Sicherheitsstufentyp des Zielobjekts bestimmt werden, sodass ein höherer Sicherheitsstufentyp einer größeren Größe des vorgegebenen Faltungskerns und einer höheren Unschärfeintensität entspricht und ein niedrigerer Sicherheitsstufentyp einer kleineren Größe des vorgegebenen Faltungskerns und einer niedrigeren Unschärfeintensität entspricht, wobei der Sicherheitsstufentyp eine Vertraulichkeitsanforderung angibt, die mit dem Zielobjekt verbunden ist.

2. Verfahren zur Entsensibilisierung von Bilddaten nach Anspruch 1, wobei das Bestimmen (S1) eines Farbkanals eines nativen Bildes als Zielbildkanal, auf dem eine Zielerkennung durchgeführt werden muss, umfasst:
Bestimmen (S1-A-1) einer Vielzahl von Ein-Kanal-Bildern, die dem nativen Bild entsprechen, basierend auf Array-Verteilungsinformationen eines Bildsensors, wobei Bildgrößen der Vielzahl von Ein-Kanal-Bildern alle kleiner sind als die des nativen Bildes; und
Bestimmen (S1-A-2) des Zielbildkanals basierend auf der Vielzahl von Ein-Kanal-Bildern.

3. Verfahren zur Entsensibilisierung von Bilddaten nach Anspruch 1, wobei das Bestimmen (S1) eines Farbkanals eines nativen Bildes als Zielbildkanal, auf dem eine Zielerkennung durchgeführt werden muss, umfasst:
Durchführen (S1-B-1) einer Bildinterpolationsverarbeitung am nativen Bild, um eine Vielzahl von Ein-Kanal-Bildern zu bestimmen, die dem nativen Bild entsprechen, wobei Bildgrößen der Vielzahl von Ein-Kanal-Bildern alle gleich der des nativen Bildes sind; und
Bestimmen (S1-B-2) des Zielbildkanals basierend auf der Vielzahl von Ein-Kanal-Bildern.

4. Verfahren zur Entsensibilisierung von Bilddaten nach Anspruch 1, wobei das Erkennen (S3) eines Zielobjekts aus dem Ein-Kanal-Bild umfasst:
Erkennen des Zielobjekts aus dem Ein-Kanal-Bild mittels eines vorab trainierten Erkennungsmodells.

5. Vorrichtung zur Entsensibilisierung von Bilddaten, umfassend:
ein Bildkanal-Bestimmungsmodul (100), das konfiguriert ist, um einen Farbkanal eines nativen Bildes als Zielbildkanal zu bestimmen, auf dem eine Zielerkennung durchgeführt werden muss;
ein Ein-Kanal-Bild-Erhaltungsmodul (200), das konfiguriert ist, um eine Bildrestauration an den nativen Daten durchzuführen, die dem Zielbildkanal entsprechen, um ein Ein-Kanal-Bild zu erhalten, das einer Farbkomponente des Zielbildkanals entspricht;
ein Bilderkennungsmodul (300), das konfiguriert ist, um ein Zielobjekt aus dem Ein-Kanal-Bild zu erkennen;
ein Sensibler-Bereich-Bestimmungsmodul (400), das konfiguriert ist, um einen sensiblen Bereich im nativen Bild basierend auf dem Zielobjekt zu bestimmen; und
ein Daten-Entsensibilisierungsmodul (500), das konfiguriert ist, um eine Daten-Entsensibilisierungsverarbeitung an den nativen Daten im sensiblen Bereich durchzuführen, indem eine Bildunschärfe-Verarbeitung am sensiblen Bereich im nativen Bild mittels eines vorgegebenen Faltungskerns durchgeführt wird, wobei eine Größe und Gewichtsverteilung des vorgegebenen Faltungskerns basierend auf einem Sicherheitsstufentyp des Zielobjekts bestimmt werden, sodass ein höherer Sicherheitsstufentyp einer größeren Größe des vorgegebenen Faltungskerns und einer höheren Unschärfeintensität entspricht und ein niedrigerer Sicherheitsstufentyp einer kleineren Größe des vorgegebenen Faltungskerns und einer niedrigeren Unschärfeintensität entspricht, wobei der Sicherheitsstufentyp eine Vertraulichkeitsanforderung angibt, die mit dem Zielobjekt verbunden ist.

6. Vorrichtung zur Entsensibilisierung von Bilddaten nach Anspruch 5, wobei das Bildkanal-Bestimmungsmodul (100) umfasst:
eine erste Bestimmungseinheit (101), die konfiguriert ist, um eine Vielzahl von Ein-Kanal-Bildern zu bestimmen, die dem nativen Bild entsprechen, basierend auf Array-Verteilungsinformationen eines Bildsensors, wobei Bildgrößen der Vielzahl von Ein-Kanal-Bildern alle kleiner sind als die des nativen Bildes; und
eine zweite Bestimmungseinheit (102), die konfiguriert ist, um den Zielbildkanal basierend auf der Vielzahl von Ein-Kanal-Bildern zu bestimmen.

7. Vorrichtung zur Entsensibilisierung von Bilddaten nach Anspruch 5, wobei das Bildkanal-Bestimmungsmodul (100) umfasst:
eine dritte Bestimmungseinheit (103), die konfiguriert ist, um eine Bildinterpolationsverarbeitung am nativen Bild durchzuführen, um eine Vielzahl von Ein-Kanal-Bildern zu bestimmen, die dem nativen Bild entsprechen, wobei Bildgrößen der Vielzahl von Ein-Kanal-Bildern alle gleich der des nativen Bildes sind; und
eine vierte Bestimmungseinheit (104), die konfiguriert ist, um den Zielbildkanal basierend auf der Vielzahl von Ein-Kanal-Bildern zu bestimmen.

8. Computerlesbares Speichermedium, das ein Computerprogramm speichert, wobei das Computerprogramm Anweisungen umfasst, die, wenn das Programm von einem Computer ausgeführt wird, den Computer veranlassen, das Verfahren zur Entsensibilisierung von Bilddaten nach einem der Ansprüche 1 bis 4 auszuführen.

9. Elektronische Vorrichtung, umfassend:
einen Prozessor (110); und
einen Speicher (120), der konfiguriert ist, um prozessorausführbare Anweisungen zu speichern, wobei
der Prozessor (110) konfiguriert ist, um die ausführbaren Anweisungen aus dem Speicher (120) zu lesen und die Anweisungen auszuführen, um das Verfahren zur Entsensibilisierung von Bilddaten nach einem der Ansprüche 1 bis 4 zu implementieren.

10. Elektronische Vorrichtung nach Anspruch 9, wobei die elektronische Vorrichtung weiterhin eine Eingabevorrichtung (130) und eine Ausgabevorrichtung (140) umfasst.

11. Elektronische Vorrichtung nach Anspruch 10, wobei die Ausgabevorrichtung (140) einen Bildschirm, einen Lautsprecher, einen Drucker und eine ferngesteuerte Ausgabevorrichtung umfasst, die über ein Kommunikationsnetzwerk verbunden ist.

## Revendications

1. Procédé de désensibilisation de données d'image, comprenant:
la détermination (S1) d'un canal de couleur d'une image native en tant que canal d'image cible sur lequel une reconnaissance cible doit être effectuée ;
la réalisation (S2) d'une restauration d'image sur des données natives correspondant au canal d'image cible, pour obtenir une image monocanal correspondant à une composante de couleur du canal d'image cible ;
la reconnaissance (S3) d'un objet cible à partir de l'image monocanal ;
la détermination (S4) d'une zone sensible dans l'image native sur la base de l'objet cible ; et
la réalisation (S5) d'un traitement de désensibilisation des données sur les données natives dans la zone sensible, comprenant : la réalisation d'un traitement de floutage d'image sur la zone sensible dans l'image native au moyen d'un noyau de convolution prédéfini, dans lequel une taille et une distribution de poids du noyau de convolution prédéfini sont déterminées en fonction d'un type de niveau de sécurité de l'objet cible, de sorte qu'un type de niveau de sécurité plus élevé correspond à une taille plus grande du noyau de convolution prédéfini et à une intensité de floutage plus élevée, et qu'un type de niveau de sécurité plus faible correspond à une taille plus petite du noyau de convolution prédéfini et à une intensité de floutage plus faible, le type de niveau de sécurité indiquant une exigence de confidentialité associée à l'objet cible.

2. Procédé de désensibilisation de données d'image selon la revendication 1, dans lequel la détermination (S1) d'un canal de couleur d'une image native en tant que canal d'image cible sur lequel une reconnaissance cible doit être effectuée comprend :
la détermination (S1-A-1) d'une pluralité d'images monocanaux correspondant à l'image native sur la base d'informations de distribution de matrice d'un capteur d'image, dans lequel les tailles d'image de la pluralité d'images monocanaux sont toutes inférieures à celle de l'image native ; et
la détermination (S1-A-2) du canal d'image cible sur la base de la pluralité d'images monocanaux.

3. Procédé de désensibilisation de données d'image selon la revendication 1, dans lequel la détermination (S1) d'un canal de couleur d'une image native en tant que canal d'image cible sur lequel une reconnaissance cible doit être effectuée comprend :
la réalisation (S1-B-1) d'un traitement d'interpolation d'image sur l'image native pour déterminer une pluralité d'images monocanaux correspondant à l'image native, dans lequel les tailles d'image de la pluralité d'images monocanaux sont toutes identiques à celle de l'image native ; et
la détermination (S1-B-2) du canal d'image cible sur la base de la pluralité d'images monocanaux.

4. Procédé de désensibilisation de données d'image selon la revendication 1, dans lequel la reconnaissance (S3) d'un objet cible à partir de l'image monocanal comprend :
la reconnaissance de l'objet cible à partir de l'image monocanal au moyen d'un modèle de reconnaissance pré-entraîné.

5. Appareil de désensibilisation de données d'image, comprenant :
un module de détermination de canal d'image (100), configuré pour déterminer un canal de couleur d'une image native en tant que canal d'image cible sur lequel une reconnaissance cible doit être effectuée ;
un module d'obtention d'image monocanal (200), configuré pour réaliser une restauration d'image sur des données natives correspondant au canal d'image cible, pour obtenir une image monocanal correspondant à une composante de couleur du canal d'image cible ;
un module de reconnaissance d'image (300), configuré pour reconnaître un objet cible à partir de l'image monocanal ;
un module de détermination de zone sensible (400), configuré pour déterminer une zone sensible dans l'image native sur la base de l'objet cible ; et
un module de désensibilisation de données (500), configuré pour réaliser un traitement de désensibilisation des données sur les données natives dans la zone sensible en réalisant un traitement de floutage d'image sur la zone sensible dans l'image native au moyen d'un noyau de convolution prédéfini, dans lequel une taille et une distribution de poids du noyau de convolution prédéfini sont déterminées en fonction d'un type de niveau de sécurité de l'objet cible, de sorte qu'un type de niveau de sécurité plus élevé correspond à une taille plus grande du noyau de convolution prédéfini et à une intensité de floutage plus élevée, et qu'un type de niveau de sécurité plus faible correspond à une taille plus petite du noyau de convolution prédéfini et à une intensité de floutage plus faible, le type de niveau de sécurité indiquant une exigence de confidentialité associée à l'objet cible.

6. Appareil de désensibilisation de données d'image selon la revendication 5, dans lequel le module de détermination de canal d'image (100) comprend :
une première unité de détermination (101), configurée pour déterminer une pluralité d'images monocanaux correspondant à l'image native sur la base d'informations de distribution de matrice d'un capteur d'image, dans lequel les tailles d'image de la pluralité d'images monocanaux sont toutes inférieures à celle de l'image native ; et
une deuxième unité de détermination (102), configurée pour déterminer le canal d'image cible sur la base de la pluralité d'images monocanaux.

7. Appareil de désensibilisation de données d'image selon la revendication 5, dans lequel le module de détermination de canal d'image (100) comprend :
une troisième unité de détermination (103), configurée pour réaliser un traitement d'interpolation d'image sur l'image native pour déterminer une pluralité d'images monocanaux correspondant à l'image native, dans lequel les tailles d'image de la pluralité d'images monocanaux sont toutes identiques à celle de l'image native ; et
une quatrième unité de détermination (104), configurée pour déterminer le canal d'image cible sur la base de la pluralité d'images monocanaux.

8. Support de stockage lisible par ordinateur, stockant un programme informatique, le programme informatique comprenant des instructions qui, lorsque le programme est exécuté par un ordinateur, amènent l'ordinateur à exécuter le procédé de désensibilisation de données d'image selon l'une quelconque des revendications 1 à 4.

9. Dispositif électronique, comprenant :
un processeur (110) ; et
une mémoire (120), configurée pour stocker des instructions exécutables par le processeur, dans lequel
le processeur (110) est configuré pour lire les instructions exécutables à partir de la mémoire (120) et exécuter les instructions pour mettre en œuvre le procédé de désensibilisation de données d'image selon l'une quelconque des revendications 1 à 4.

10. Dispositif électronique selon la revendication 9, dans lequel le dispositif électronique comprend en outre un dispositif d'entrée (130) et un dispositif de sortie (140).

11. Dispositif électronique selon la revendication 10, dans lequel le dispositif de sortie (140) comprend un écran, un haut-parleur, une imprimante et un dispositif de sortie à distance connecté par un réseau de communication.
